# EUROPÄISCHE PATENTSCHRIFT

(11) **EP 3 961 577 B1**
(45) Veröffentlichungstag und Bekanntmachung des Hinweises auf die Patenterteilung: **12.11.2025**
(21) Anmeldenummer: 21194259.4
(22) Anmeldetag: 01.09.2021
(51) Int. Cl.: G06V 10/774, G06V 20/52

(54) **VERFAHREN ZUM VISUELLEN ÜBERWACHEN VON WARENBEWEGUNGEN ZUM ERKENNEN EINER PASSAGE DER WAREN AN EINEM ÜBERWACHUNGSPUNKT**
METHOD FOR VISUALLY MONITORING THE MOVEMENT OF GOODS TO DETECT THE PASSAGE OF THE GOODS AT A MONITORING POINT
PROCÉDÉ DE SURVEILLANCE VISUELLE DES MOUVEMENTS DE MARCHANDISES POUR DÉTECTER LE PASSAGE DES MARCHANDISES À UN POINT DE SURVEILLANCE

(30) Priorität: 01.09.2020 DE 102020122832
(43) Veröffentlichungstag der Anmeldung: 02.03.2022
(73) Patentinhaber: Certus Warensicherungs-Systeme GmbH, 26441 Jever (DE)
(72) Erfinder: SCHÖBEL, Michael, 26419 Schortens (DE)
(74) Vertreter: Jabbusch, Matthias

(56) Entgegenhaltungen:
- WO-A1-2019/013711
- US-B1- 9 064 161

## Beschreibung

Die Erfindung betrifft ein computerimplementiertes Verfahren zum visuellen Überwachen von Warenbewegungen zum Erkennen einer Passage der Waren an einem Überwachungspunkt, insbesondere zum Überwachen von Handelswaren bei ihrer Passage durch einen Kassenbereich, bei dem die Waren mit einer optischen Kamera erfasst werden und erfasste Bilder in einem Speicher abgelegt werden, und in einem Anlernvorgang Bilder, die nicht die überwachten Waren zeigen, erfasst und als falsch deklariert und als Produktnichterkennungen abgelegt werden, und dass Bilder, die die überwachten Waren zeigen, erfasst und als Produktkennzeichen deklariert und in einer Produkterkennung verwendet werden.

Vorgenannte Verfahren sind aus dem Handhaben mit Waren insbesondere in Supermärkten bekannt. Nicht immer geben Kunden an, dass insbesondere auf den unteren Ablagen ihrer Einkaufskörbe noch Waren angeordnet sind. Sie können vergessen werden, mancher Kunde mag auch hoffen, dass diese Waren bei dem Kassiervorgang nicht erkannt werden.

Es können aber auch andere Warenbewegungen überwacht werden, beispielsweise von Versandbehältern im Onlinehandel dahingehend, ob diese Versandbehälter vollständig geschlossen sind.

Bei den bekannten Verfahren zum visuellen Überwachen von Warenbewegungen insbesondere im Warenhausbereich ist bisher stets so vorgegangen worden, dass mit Produkterkennungen gearbeitet wurde und erkannte Produkte mit im Speicher abgelegten Produktinformationen verglichen wurden. Dabei tritt die Schwierigkeit auf, dass Produkte manchmal dann nicht erkannt werden können, wenn sie nicht lagegenau der Kamera zugeführt werden. Manchmal kann auch ein Bodenbein oder Ähnliches im Blickweg sein, so dass hier die Erkennung erschwert ist.

Aus der US 9 064 161 B1 ist ein Verfahren der eingangs genannten Gattung bekannt. Bei diesem Verfahren werden Bilder, die nicht die überwachten Waren zeigen, bei der Produkterkennung verwendet. Es handelt sich um sogenannte "negative examples".

Die Erfindung ist in den unabhängigen Ansprüchen dargelegt.

Der Erfindung liegt die Aufgabe zugrunde, ein Verfahren der eingangsgenannten Gattung aufzuzeigen, bei dem das Erkennen der passierenden Waren verbessert ist.

Diese Aufgabe ist erfindungsgemäß dadurch gelöst, dass die Bilder, die nicht die überwachten Waren zeigen, in einer Datenbank abgelegt werden und diese Bilderbei der Produkterkennung ausgeschlossen werden.

Auch bei dem erfindungsgemäßen Verfahren wird eine Produkterkennung von Waren vorgenommen. Bilder, die dabei erzeugt werden, werden abgespeichert und später für die Produkterkennung verwendet.

Bei dem erfindungsgemäßen Verfahren werden aber auch Bilder abgespeichert, die erkennbar nicht die überwachte Ware zeigen. Bei diesen Bildern kann es sich beispielsweise um den Hintergrund in einem Kassengang ohne einen Einkaufswagen handeln. Aber auch dann, wenn ein eingeschobener Einkaufswagen noch nicht direkt vor der Kamera steht, werden aufgenommene Bilder als Produktnichterkennungen deklariert und zum Beispiel in einem separaten Speicher abgelegt. Diese Bilder werden bei der Produkterkennung ausgeschlossen. Für die Produkterkennung soll das beste Bild verwendet werden.

Erst wenn der Einkaufswagen unmittelbar vor der Kamera und insofern perfekt im Fokus der Kamera steht, wird das dann aufgenommene Bild für die Produkterkennung verwendet. So verhält es sich auch mit aufgenommenen Beinen von Konsumenten oder Stegmustern auf der Kleidung von Konsumenten. Es wird also ein aktives Aufzeichnen von Produktnichterkennungen vorgenommen, für diese gibt es eine separate Ablage in den bereits genannten Speicher.

Auch andere Warenbewegungen können so erkannt werden. Kartons im Onlinehandel, die perfekt geschlossen sind, können einen Überwachungspunkt passieren, ein von dieser Norm abweichender Karton, beispielsweise nicht richtig verschlossen, wird als Nichtprodukt erkannt und als falsch deklariert. Hier kann dann später eine mechanische Aussortierung dieser Verpackung erfolgen.

Die nach dem erfindungsgemäßen Verfahren zusätzlich aufgenommenen Bilder der Produktnichterkennungen werden nach einer Weiterbildung in einer separaten Software abgelegt. Sie können aber auch in einer Datenbank abgelegt werden. Dieser Software oder der Datenbank können auch Bilder von Produktnichterkennungen von außen zugeführt werden. So sind in diesem Anlernvorgang Bilder von Fehlstellungen des Einkaufwagens zuführbar.

Eine nächste Weiterbildung der Erfindung sieht vor, dass die in der Software oder in der Datenbank abgelegten Bilder, die Produktnichterkennungen zeigen, bei der Produkterkennung für die Waren berücksichtigt werden. Das Ablegen der Bilder zu Produktnichterkennungen erfolgt also nicht zu einem Selbstzweck, sondern um die Produkterkennung für die Waren zu unterstützen. In dem Anlernvorgang werden eine Vielzahl von Bildern aufgenommen, die beispielsweise nicht die Mitte eines Einkaufswagens zeigen, in dem die zu erkennende Ware zumeist angeordnet ist. Es kann sich dabei um die Spitze des Einkaufswagens oder auch um das Ende des Einkaufswagens handeln. Während des Anlernvorgangs können eine Vielzahl von Bildern der Einkaufswagenspitze oder des Einkaufswagenendes aufgenommen werden, die dann in der Software oder in der Datenbank abgelegt werden. Während der Produkterkennung wird dann mit der Kamera ja wieder die Wagenspitze oder das Wagenende aufgenommen, aufgrund der Datenbank mit den Bildern der Produktnichterkennungen kann in der Produkterkennung dann aber so gearbeitet werden, dass diese Bilder anzeigen, dass jetzt noch nicht die Produkterkennung gestartet werden soll. Im Stand der Technik wurde diesbezüglich beispielsweise mit Lichtschranken gearbeitet, diese wurden aber auch durch die Einkaufwagenspitze oder auch durch ein Hosenbein ausgelöst. Jetzt wird während der Produkterkennung tatsächlich erst dann ein Bild beispielsweise des Einkaufwagens aufgenommen, wenn eine in diesem Einkaufwagen aufgenommene Ware gut zu erkennen ist. Schlechte Erkennungen wurden bereits im Anlernvorgang als Produktnichterkennungen abgelegt, diese werden jetzt bei der Produkterkennung aktiv ausgeschlossen.

Ziel der Behandlung der Bilder von Produktnichterkennungen ist es, für die Produkterkennung das beste Bild zu verwenden. Nach dem erfindungsgemäßen Verfahren wird also genau unterschieden zwischen Bildern, die die zu überwachende Ware nicht perfekt zeigen und Bildern, die die zu überwachende Ware perfekt zeigen.

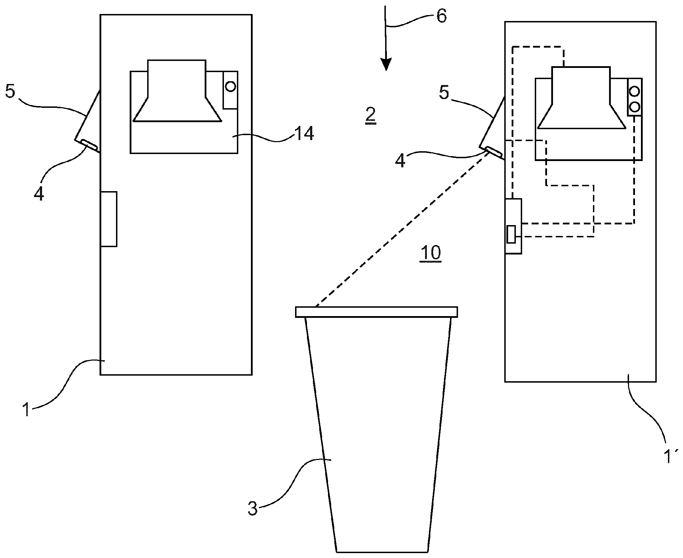

Ein Ausführungsbeispiel zum Umsetzen des erfindungsgemäßen Verfahrens wird in der Zeichnung dargestellt. Die einzige Figur der Zeichnung zeigt eine schematische Draufsicht auf einen Durchgang zwischen zwei Kassentischen in einem Supermarkt.

Die beiden Kassentische 1, 1' sind parallel zueinander ausgerichtet, zwischen diesen Tischen 1, 1' ist ein Kassengang 2 ausgebildet. Auf jedem Kassentisch 1, 1' ist ein Kassen-PC 14 angeordnet. Dieser Kassen-PC 14 ist mit einer Kamera 4 verschaltet, diese Kamera 4 überstreicht ein Sichtfeld 10 im Kassengang 2. Dabei ist die Kamera 4 in einem an den Kassentisch 1, 1' angesetzten Gehäuse 5 angeordnet.

Zwischen den beiden Kassentischen 1, 1' befindet sich ein Einkaufswagen 3. Dieser Einkaufswagen 3 befindet sich im Sichtfeld 10 der Kamera 4, jetzt aufgenommene Bilder können im Bereich des Kassen-PC 14 durch bekannt Vorrichtungen für eine Produkterkennung verwendet werden.

Der Einkaufswagen 3 wurde entlang eines Pfeils 6 in den Kassengang 2 eingeführt, dabei war er zunächst beispielsweise nur mit seinen vorderen Abschnitten in Sichtfeld 10 angeordnet. Während dieser Anordnung angefertigte Bilder wurden nach dem erfindungsgemäßen Verfahren als Produktnichterkennungen eingestuft und nicht für die Produkterkennung verwendet, sondern in einem separaten Speicher angeordnet.

## Patentansprüche

1. Verfahren zum visuellen Überwachen von Warenbewegungen zum Erkennen einer Passage von Waren an einem Überwachungspunkt, insbesondere zum Überwachen von Handelswaren bei ihrer Passage durch einen Kassenbereich, bei dem Bilder der Waren mit einer optischen Kamera erfasst werden und die erfassten Bilder in einem Speicher abgelegt werden, wobei in einem Anlernvorgang Bilder, die nicht die überwachten Waren zeigen, erfasst und als falsch deklariert und als Produktnichterkennungen abgelegt werden, und dass Bilder, die die überwachten Waren zeigen, erfasst und als Produktkennzeichen deklariert und in einer Warenerkennung verwendet werden,
**dadurch gekennzeichnet,**
**dass** die Bilder, die nicht die überwachten Waren zeigen, in einer Datenbank abgelegt werden und diese Bilder bei der Warenerkennung ausgeschlossen werden.

2. Verfahren nach Anspruch 1, **dadurch gekennzeichnet, dass** der Datenbank als falsch deklarierte Bilder von außen zugeführt werden.

3. Verfahren nach Anspruch 2, **dadurch gekennzeichnet, dass** die Zuführung der als falsch deklarierten Bildern über Datenleitungen oder über Datenträger durchgeführt wird.

## Claims

1. A method for visually monitoring the movement of goods in order to detect the passage of the goods at a monitoring point, particularly for monitoring merchandise as it passes through a checkout area, wherein images of the goods are captured with an optical camera and the captured images are stored in a memory, and wherein, in a learning process, images that do not show the monitored goods are captured, declared as false and stored as product non-recognitions and images that show the monitored goods are captured, declared as product identifiers and used in a goods recognition,
**characterized in**
**that** the images that do not show the monitored goods are stored in a database and these images are excluded from the goods recognition.

2. The method according to claim 1, **characterized in that** images declared as false are fed to the database from outside.

3. The method according to claim 2, **characterized in that** the feed of the images declared as false is carried out via data lines or via data carriers.

## Revendications

1. Procédé, destiné à superviser des déplacements de marchandises, pour identifier un passage de marchandises à un point de supervision, notamment pour superviser des marchandises commerciales lors de leur passage dans une zone de caisses, lors duquel des images des marchandises sont détectées par une caméra optique et les images sont sauvegardées dans une mémoire, lors d'un processus d'apprentissage, des images qui ne montrent pas les marchandises supervisées étant détectées et déclarées comme étant erronées et sauvegardées en tant que non identifications de marchandises et des images montrant les marchandises supervisées étant détectées et déclarées en tant qu'identification de marchandises et des images montrant les marchandises supervisées étant détectées et déclarées en tant que caractéristiques de produits et utilisées dans une identification des marchandises,
**caractérisé en ce que**
les images qui ne montrent pas les marchandises supervisées sont sauvegardées dans une base de données et **en ce que** lesdites images sont exclues lors de l'identification des marchandises.

2. Procédé selon la revendication 1, **caractérisé en ce que** des images déclarées comme étant erronées sont amenées par l'extérieur à la base de données.

3. Procédé selon la revendication 2, **caractérisé en ce que** l'amenage des images déclarées comme étant erronées est réalisé par l'intermédiaire de lignes de données ou par l'intermédiaire de supports de données.
